# EUROPÄISCHE PATENTSCHRIFT

(11) **EP 1 474 348 B1**
(45) Veröffentlichungstag und Bekanntmachung des Hinweises auf die Patenterteilung: **03.01.2007**
(21) Anmeldenummer: 03739447.5
(22) Anmeldetag: 25.01.2003
(51) Int. Cl.: B65G 47/84

(54) **FÖRDERVORRICHTUNG**
CONVEYOR
DISPOSITIF DE TRANSPORT

(30) Priorität: 12.02.2002 DE 10206634
(43) Veröffentlichungstag der Anmeldung: 10.11.2004
(73) Patentinhaber: KRONES AG, 93068 Neutraubling (DE)
(72) Erfinder: WITTMANN, Walter, 84069 Schierling (DE); BRUNNER, Andreas, 93089 Aufhausen (DE); PÖLLINGER, Klaus, 93149 Nittenau (DE)
(86) Internationale Anmeldenummer: PCT/EP2003/000762
(87) Internationale Veröffentlichungsnummer: WO 2003/068643

(56) Entgegenhaltungen:
- US-A- 3 175 702
- US-A- 3 987 605
- US-A- 4 023 513

## Beschreibung

Die Erfindung bezieht sich auf eine Fördervorrichtung der im Oberbegriff von Anspruch 1 erläuterten Art.

Eine derartige Fördervorrichtung ist aus der US-PS 3 175 702 bekannt. Die bekannte Fördervorrichtung ist als sogenannter Wackeltaschenstern ausgebildet, d.h. sie enthält einen kreisförmig um eine Achse umlaufenden Förderträger, an dessen Umfang eine Vielzahl von Aufnahmeelementen angeordnet sind, die eine nach außen offene Aufnahmeöffnung aufweisen, in die Fördergüter, bevorzugt flaschenartige Behälter, mit ihrem Hals so eingesetzt werden können, dass das Aufnahmeelement einen Wulst oder dergleichen am Behälter untergreift und der Behälter somit auf dem Aufnahmeelement hängt. An einer anderen Stelle des Umfangs des Trägers wird der Behälter meist an eine weitere Vorrichtung übergeben, in dem er einfach aus den nach außen-offenen Aufnahmeöffnungen des Aufnahmeelementes herausgezogen wird. Die Übergabe der Behälter an einen derartigen Sternförderer und das Abnehmen der Behälter von diesen Sternförderern erfolgt bevorzugt automatisch. Da jedoch nie auszuschließen ist, dass die Be-und Entladevorrichtungen nicht absolut synchron mit dem Sternförderer arbeiten, sind die Aufnahmeelemente bei dieser Art von Förderern ausweichbar gelagert. Das Aufnahmeelement der bekannten Fördervorrichtung ist zu diesem Zweck um eine Drehachse schwenkbar gelagert. Beidseitig der Drehachse sind zentrierfinger angeordnet, die am Träger schwenkbar gelagert sind und die durch eine Feder in Richtung zueinander und in Anlage an die Drehachsegezogen werden. Am Aufnahmeelement sind zwei Betätigungsstifte vorgesehen, die im Abstand zur Drehachse an den Zentrierfingern anliegen. Wird jetzt das Aufnahmeelement um die Drehachse verschwenkt, so wird durch den der Schwenkbewegung vorlaufenden Stift gegen die Kraft der Feder einer der Zentrierfinger von der Drehachse abgehoben, wobei sich der Abstand zum anderen Zentrierfinger vergrößert. Wird die das Ausweichen des Aufnahmeelementes verursachende Kraft aufgehoben, so zieht die Feder den ausgelenkten Zentrierfinger zurück, der wiederum das Aufnahmeelement mitnimmt. Bei der bekannten Fördervorrichtung wirkt die Feder etwa parallel zur Förderrichtung. Da diese Art Fördervorrichtungen sehr schnell laufen, können die auf die Feder einwirkenden Zentrifugalkräfte zu Funktionsproblemen führen. Weiterhin können mit dieser Art der Anordnung der Feder nur Schwenkbewegungen um eine Drehachse belastet werden. Ausserdem ist die bekannte Fördervorrichtung relativ kompliziert aufgebaut und daher kostspielig und störungsanfällig.

Weiterhin ist aus der IT 1 296 413 eine Fördervorrichtung bekannt, bei der die Aufnahmeelemente über ein elastisch nach allen Seiten biegbares Verbindungsstück aus Kunststoff mit dem Träger verbunden sind. Diese Ausgestaltung ist einem starken Verschleiß unterworfen und die Mittellage der Aufnahmeelemente ist nicht ausreichend stabil.

Schließlich ist durch die US-A-4 023 513 bereits eine Fördervorrichtung für Dosen in Form eines Sternrads - bekannt, dessen-Aufnahmen durch zangenartig angeordnete Greifbacken gebildet werden. Jeweils zwei zusammengehörige Greifbacken sind gemeinsam auf einer am Träger befestigten Drehachse gelagert und werden einzeln durch im Wesentlichen quer zur Umlaufrichtung angeordnete Zugfedern im Schließsinne vorgespannt. Durch eine stationäre Steuerkurve, an der die Greifbacken unter Binfluss der zugfedern anliegen, können diese einzeln im Schließsinne bzw. im öffnungssinne betätigt werden. Eine gemeinsame Ausweich-Drehbewegung einer durch zwei Greifbacken gebildeten Aufnahme ohne Relativbewegung der Greifbacken ist hier nicht vorgesehen.

Der Erfindung liegt die Aufgabe zugrunde, eine Fördervorrichtung mit einer konstruktiv einfachen, universell einsetzbaren und betriebssicheren Lagerung der Aufnahmeelemente zu schaffen.

Diese Aufgabe wird durch die im Anspruch 1 angegebenen Merkmale gelöst.

Durch die erfindungsgemäße Ausgestaltung wird eine im wesentlichen senkrecht zur Förderrichtung wirkende Feder zum Belasten der Verschwenk-Ausweichbewegung eingesetzt. Die Feder arbeitet zuverlässig und kann durch eine eventuell auftretende Zentrifugalkraft nicht seitlich ausgelenkt werden. Die Neutralstellung der Aufnahmeelemente ist äußerst stabil.

Vorteilhafte Weiterbildungen der Erfindung sind den Unteransprüchen zu entnehmen.

So ist es beispielsweise gemäß Anspruch 4 möglich, durch eine einzige Feder sowohl eine Ausweich-Verschwenkbewegung als auch eine Ausweich-Verschiebung zu belasten.

Ausführungsbeispiele der Erfindung werden nachfolgend anhand der Zeichnungen näher erläutert. Es zeigen:
- Fig. 1: eine Draufsicht auf eine erfindungsgemäß ausgebildete Fördervorrichtung in schematischer Darstellung,
- Fig. 2: eine Detailvergrößerung im Bereich A der Fig. 1 eines ersten Ausführungsbeispiels,
- Fig. 3: die Ansicht III - III aus Fig. 2,
- Fig. 4: die Ansicht IV - IV aus Fig. 2,
- Fig. 5: ein Detail eines weiteren Ausführungsbeispiels der erfindungsgemäßen Fördervorrichtung in perspektivischer Darstellung,
- Fig. 6: das Ausführungsbeispiel gemäß Fig. 5 in Neutralstellung,
- Fig. 7: das Ausführungsbeispiel nach Fig. 5, ausgeschwenkt nach einer Richtung,
- Fig. 8: das Ausführungsbeispiel gemäß Fig. 5, ausgeschwenkt in die andere Richtung,
- Fig. 9: ein Detail eines weiteren Ausführungsbeispiels.

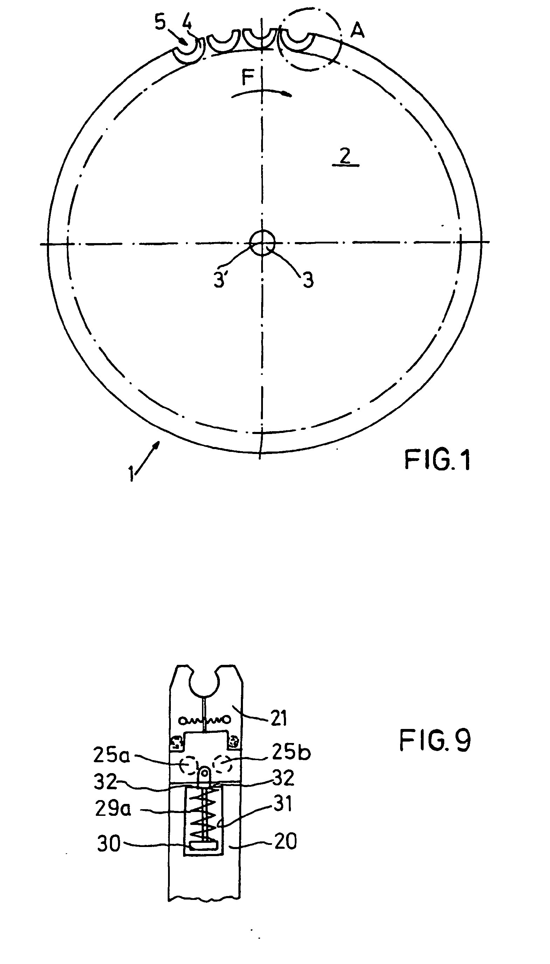

In Fig. 1 ist eine Fördervorrichtung 1 ersichtlich, die als Förderstern ausgebildet ist, wie er z.B. in automatisch arbeitenden Förderanlagen zum Fördern von Kunststoffflaschen oder ähnlichen Behältern bzw. Vorformlingen hierfür und in Streckblasmaschinen verwendet wird. Die Erfindung ist jedoch nicht auf kreisförmig umlaufende Fördervorrichtungen beschränkt, sondern kann beispielsweise auch für endlos umlaufende Kettenförderer oder dergleichen eingesetzt werden. Die Fördervorrichtung 1 enthält einen Träger 2, der über eine Welle 3 in bekannter Weise um eine senkrecht zur Fig. 1 verlaufende Drehachse 3' in Richtung des Pfeiles F, der Förderrichtung, drehend angetrieben wird. Am Umfang des Trägers 2 sind eine Vielzahl von Aufnahmeelementen 4 mit radial nach aussen hin offenen Aufnahmeöffnungen 5 angeordnet. In Fig. 1 sind diese Aufnahmeelemente 4 nur über einen Teil des Umfangs gezeigt, selbstverständlich ist jedoch der gesamte Umfang mit diesen Aufnahmeelementen 4 besetzt. Die Aufnahmeelemente 4 können beispielsweise mit die Aufnahmeöffnung 5 umschließenden, steuerbaren Greiffingern ausgestattet sein oder sie können relativ zueinander elastisch bewegbare Greifbacken aufweisen, wie dies im Stand der Technik hinreichend bekannt ist, so dass die spezielle Konstruktion nicht nochmals erläutert werden muss.

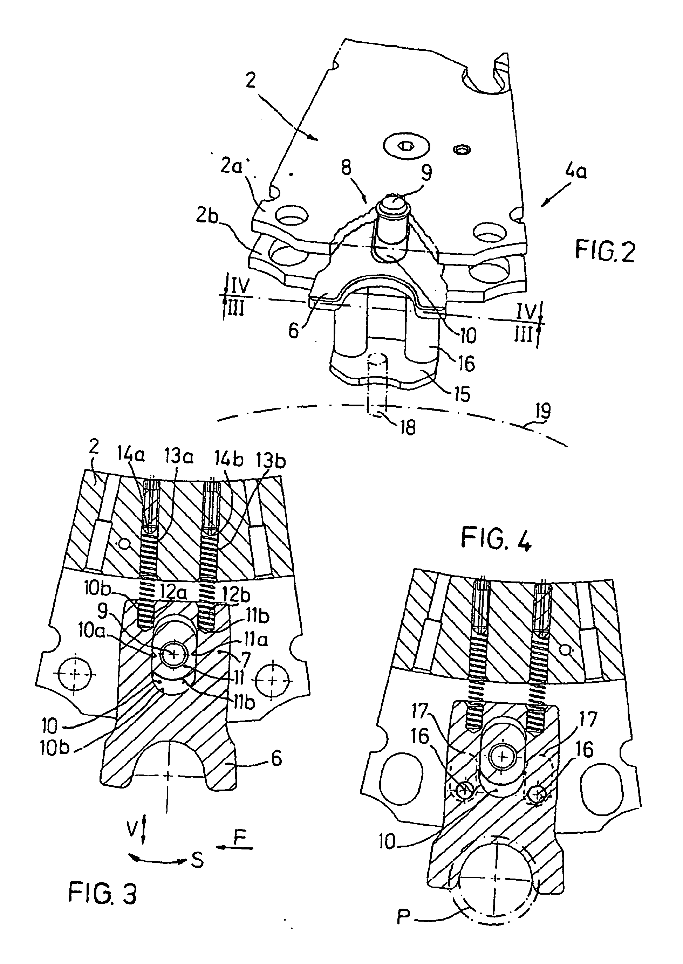

Fig. 2 zeigt ein erstes Ausführungsbeispiel eines Aufnahmeelementes 4a für eine erfindungsgemäß ausgerüstete Fördervorrichtung 1. Das Aufnahmeelement 4a weist starr miteinander verbundene, gabelförmig angeordnete Finger 6 auf, die mit einem rückwärtigen, d.h. in Richtung der Drehwelle 3 weisenden Ende über ein Montageteil 7 zwischen einer oberen Platte 2a und einer unteren Platte 2b des Trägers 2 über ein Dreh-Verschiebe-Lager 8 gelagert ist. Das Dreh-Verschiebe-Lager 8 weist eine stiftförmige Drehachse 9 auf, die in der oberen und der unteren Platte 2a, 2b festgelegt ist. Die Drehachse 9 erstreckt sich durch eine als Langloch ausgebildete Öffnung 10 in der Montageplatte 7. Die Abmessungen der Öffnung 10 sind in jeder Richtung größer als der Durchmesser der Drehachse 9. Zwischen der Drehachse 9 und der Montageplatte 7 ist in der Öffnung 10 ein Führungsstück 11 angeordnet, das um die Drehachse 9 verdrehbar ist. Das Führungsstück 11 hat beidseitig und im Abstand zur Drehachse 9 zwei Gleitflächen 11a, die sich im wesentlichen senkrecht zur Förderrichtung F erstrecken und gleitend an entsprechend ausgebildeten Seitenflächen 10a der Öffnung 10 anliegen. Senkrecht zur Förderrichtung F ist das Führungsstück 11 kürzer als die Öffnung 10, so dass sich das Montageteil 7 mit den Gabelfingern 6 so weit in Richtung des Doppelpfeiles V verschieben kann, bis die entsprechende Stirnseite 11b des Führungsstückes 11 an der zugeordneten Stirnseite 10b der Öffnung 10 anschlägt.

An dem in Richtung auf die Drehwelle 3 weisenden, hinteren Ende des Montageteils 7 des Aufnahmeelementes 4a befinden sich sacklochartige Angriffspunkte 12a und 12b zweier als Druckfedern ausgebildeten Schraubenfedern 13a und 13b, deren andere Enden an sacklochartigen Angriffsstellen 14a und 14b am Träger 2 anliegen. Die Federn 13a, 13b erstrecken sich im wesentlichen rechtwinkelig zur Förderrichtung F und parallel zueinander. Der Begriff "im wesentlichen rechtwinkelig zur Förderrichtung" soll bedeuten, dass die Krümmung der Förderrichtung der Fördervorrichtung gemäß Fig. 1 vernachlässigbar ist, so dass nicht allein streng radiale Richtungen in diesen Begriff eingeschlossen sind. Die Angriffspunkte 12a, 12b liegen im Abstand entlang der Förderrichtung F beidseitig der Drehachse 9, so dass das Aufnahmeelement 4a symmetrisch zur Drehachse 9 belastet ist und bezüglich der Drehachse 9 eine Hebelwirkung erzeugt wird.

Das Aufnahmeelement 4a ist weiterhin mit einer Mitnehmerplatte 15 versehen. Die Mitnehmerplatte 15 steht über Abstandsstifte 16 mit den Fingern 6 in Verbindung, wobei sich die Abstandsstifte 16 durch langlochartige Öffnungen 17 (Fig. 4) in der unteren Platte 2b des Trägers 2 erstrecken, deren Abmessungen größer sind als die Abmessungen der Abstandsstifte 16; und zwar derart, dass beide Öffnungen 17 als Anschlag insbesondere für eine Schwenkbewegung S um die Drehachse 9 dienen.

Das Aufnahmeelement 4a kann sich somit entlang des Doppelpfeiles S zusammen mit dem Führungsstück 11 um die Drehachse 9 und entgegen der Federkraft der Federn 13a, 13b verschwenken, so weit es die in den Öffnungen 17 laufenden Abstandsstifte 16 gestatten. Im dargestellten Ausführungsbeispiel erfolgt die verschwenkbewegung aus der in den Fig. 2 bis 4 dargestellten Ruhelage symmetrisch beidseitig bezüglich der Drehachse 9, d.h. sowohl in Förderrichtung F als auch entgegen der Förderrichtung F. Das Aufnahmeelement 4a kann sich weiterhin, wiederum gegen die Kraft der Federn 13a, 13b, in Richtung des Doppelpfeiles V relativ zur Drehachse 9 und zum Führungsstück 11 im wesentlichen senkrecht zur Förderrichtung F verschieben.

Im Betrieb wird durch ein zweckmäßiges Zusammenwirken der Federn 13a, 13b und der Anschläge 10b, 11b bzw. 16, 17 die in den Fig. 2 bis 4 dargestellte Normallage des Aufnahmeelementes 4a stabil definiert. Wirkt auf das Aufnahmeelement 4a eine Kraft ein, die die Federkraft der Federn 13a, 13b übersteigt, so ist eine Ausweichbewegung des Aufnahmeelementes 4a möglich, wobei in der Praxis selten die reinen Grundbewegungen V und S gefragt sind, sondern sich das Ausweichen durch jede geeignete Kombination dieser Grundbewegungen V und S gestaltet.

Die Ausweichbewegung kann z. B. direkt durch einen Vorformling P ausgelöst werden, wenn dieser vom vorgeschalteten Transportorgan 19 zwischen die Finger 6 eines Aufnahmeelementes 4 hineingedrückt wird. Die Ausweichbewegung kann jedoch auch aktiv gesteuert werden, nämlich durch an den Mitnehmerplatten 15 angreifende Steuerbolzen 18, die am vorgeschalteten Transportorgan 19 befestigt sind. Dieses kann z. B. ein Heizrad für die Vorformlinge P sein, auf dem diese durch in die Mündung eingreifende Dorne fixiert sind. Dabei ist es zweckmäßig, wenn die Kreisbahn der starren Steuerbolzen 18 in die theoretische Kreisbahn der elastisch nachgiebigen Mitnehmerplatten 15 geringfügig eindringt, so dass sich deren Bewegungsbahn kurzzeitig der Kreisbahn der Steuerbolzen 18 anpasst. Hierdurch wird die Übergabe der vorformlinge vom Transportorgan 19 zur Fördervorrichtung 1 entscheidend verbessert und es wird ausreichend Zeit geschaffen, um die Dorne aus der Mündung der Vorformlinge P zu entfernen.

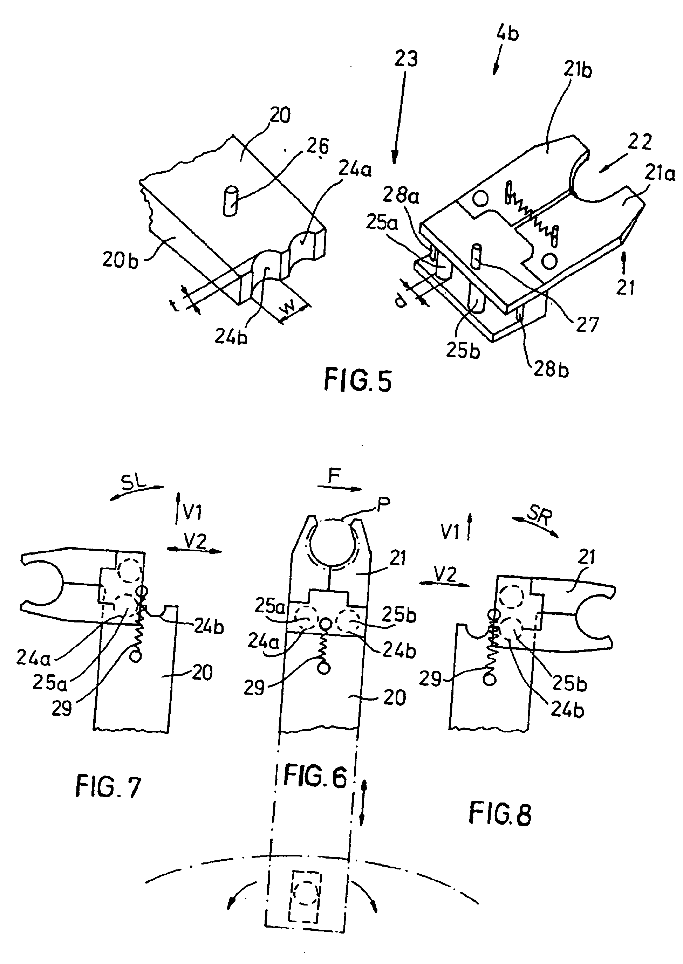

In den Fig. 5 bis 8 ist ein zweites Ausführungsbeispiel eines Aufnahmeelementes 4b gezeigt, das in gleicher Weise wie das Aufnahmeelement 4a in der in Fig. 1 dargestellten Fördervorrichtung 1 eingesetzt werden kann.

Das Aufnahmeelement 4b enthält eine Montageplatte 20, die an einem nicht dargestellten Träger, beispielsweise dem Träger 2 der Fördervorrichtung 1, starr befestigt oder bewegungsgesteuert gelagert ist. Das Aufnahmeelement 4b enthält ferner ein Greiferteil 21, das im vorliegenden Ausführungsbeispiel relativ zueinander bewegbare Greiferbacken 21a und 21b enthält, die eine Aufnahmeöffnung 22 umschließen. Die beiden Greiferbacken 21a, 21b können in üblicher und nicht dargestellter Weise zum Öffnen und Schließen der Aufnahmeöffnung 22 um einen entsprechenden Halsbereich eines Behälters bewegt werden.

Die Montageplatte 20 und das Greiferteil 21 sind über ein Dreh-Verschiebe-Lager 23 miteinander verbunden. Das Dreh-Verschiebe-Lager 23 enthält zwei im wesentlichen halbzylinderförmige Sitzvertiefungen 24a, 24b, die in der nach außen weisenden und im wesentlichen parallel zur Drehachse 3' des Trägers 2 verlaufenden Stirnseite der Montageplatte 20 eingearbeitet sind. Das Dreh-Verschiebe-Lager 23 enthält weiterhin zwei Lagerstifte 25a, 25b, die an der zur Montageplatte 20 weisenden Stirnseite des Greiferteils 21 vorgesehen sind. Die Montagestifte 25a, 25b haben einen Durchmesser d, der etwas geringer ist als die Öffnungsweite w der Sitzvertiefungen 24a, 24b. Die Sitzvertiefungen 24a, 24b haben eine Tiefe t, die kleiner oder gleich dem halben Durchmesser d der Lagerstifte 25a, 25b ist.

Beide Lagerstifte 25a, 25b sind mit dem gleichen Abstand ihrer Mittellinien zueinander angeordnet, wie die Sitzvertiefungen 24a, 24b. Auf diese Weise sind die Lagerstifte 25a, 25b mit einem Spiel parallel zur Förderrichtung F aufgenommen, das in Radialrichtung nach außen, d.h. senkrecht zur Förderrichtung F, zunimmt.

Symmetrisch zwischen den Sitzvertiefungen 24a und 24b ist an der Montageplatte 20 ein Befestigungsstift 26 und in der Mitte zwischen den Lagerstiften 25a, 25b ist am Greiferteil 21 ein weiterer Befestigungsstift 27 angeordnet, wobei die Befestigungsstifte 26 und 27 auf einer gemeinsamen Verbindungslinie rechtwinklig zur Förderrichtung F liegen und die Anlenkpunkte der in den Fig. 7 bis 8 dargestellten, als Zugfeder ausgebildeten Schraubenfeder 29 bilden. Der Befestigungsstift 26 befindet sich in der Mitte zwischen den beiden Sitzvertiefungen 24a, 24b, sowie radial einwärts und im Abstand zu diesen. Der Stift 27 befindet sich in der Mitte zwischen den beiden Lagerstiften 25a, 25b und auf der den Sitzvertiefungen 24 zugewandten Seite der Verbindung der Mittellinien der beiden Lagerstifte 25a, 25b, so dass die Feder 29 durch ihren parallel zur Förderrichtung F verlaufenden Anteil des Abstandes zu den Lagerstiften 25 eine Hebelwirkung entfaltet.

Beidseitig der Lagerstifte 25a, 25b, an den Außenseiten des Greiferteils 21, sind Anschlagflächen 28a, 28b vorgesehen, die mit der jeweils anliegenden Seitenfläche 20b der Montageplatte 20 zusammenwirken.

Durch die Kraft der Feder 29 werden beide Lagerstifte 25a, 25b symmetrisch in die jeweils anliegende Sitzvertiefung 24a, 24b in die in Fig. 6 dargestellte Normalstellung des Aufnahmeelementes 4b gezogen.

Wirkt auf das Greiferteil 21 eine Kraft ein, die die Kraft der Feder 29 übersteigt, so wird das Greiferteil 9, je nach Richtung der Krafteinwirkung, aus der Normalstellung ausgeschwenkt, wie dies in den Fig. 7 und 8 dargestellt ist. Das Greiferteil 21 kann somit, wie Fig. 7 zeigt, in Richtung des Doppelpfeiles S_{L} nach links, d.h. entgegen der Förderrichtung F ausgeschwenkt werden, wobei sich das Greiferteil 21 um den in der Sitzvertiefung 24a sitzenden Stift 25a so weit verschwenkt, bis der Anschlag 28a an der anliegenden Seitenwand 20b der Montageplatte 20 anschlägt und der Lagerstift 25b aus seiner Sitzvertiefung 24b austritt. Weiterhin ist eine Verschiebung V₁ nach außen und im wesentlichen senkrecht zur Förderrichtung F sowie eine Verschiebung V₂ etwa parallel zur Förderrichtung möglich. Alle Bewegungen erfolgen gegen die Kraft der Feder 29. Demzufolge wird die Feder 29 bestrebt sein, das Greiferteil wieder in die Normalstellung gemäß Fig. 6 zurück zu ziehen, sobald die auslenkende Kraft aufhört. In gleicher Weise kann das Greiferteil 21, wie Fig. 8 zeigt, nach rechts um den in der Sitzvertiefung 24b sitzenden Lagerstift 25b verschwenkt werden, bis der Anschlag 28b an der zugeordneten Seitenfläche 20b anschlägt.

Die vorstehend beschriebene Fördervorrichtung nach Figur 5 bis 8 ist z. B. zum Einsetzen von erwärmten Vorformlingen P in die geöffneten Blasformen von Streckblasmaschinen besonders gut geeignet. Wird aus irgendeinem Grund der Vorformling nicht ordnungsgemäß von der Blasform aufgenommen, so ermöglicht das Dreh-verschiebe-Lager 23 ein sofortiges Ausweichen des betreffenden Greiferteils 21 mit dem vorformling. Beschädigungen der kostspieligen Blasformen sowie der Fördervorrichtung selbst werden so zuverlässig vermieden und ein Notstopp der Streckblasmaschine ist nicht erforderlich. Im vorbeschriebenen Einsatzfall ist es zweckmäßig, die Montageplatten 20 mit den Greifteilen 21 sowohl verschwenkbar als auch verschiebbar am Träger 2 zu lagern und mittels nicht gezeigter üblicher Kurvensteuerungen zu positionieren. Dies ist in Figur 6 strichpunktiert angedeutet.

Das Ausführungsbeispiel nach Figur 9 unterscheidet sich vom Ausführungsbeispiel nach Figur 5 bis 8 allein in der Gestaltung des Federelements. Dieses ist hier als Druckfeder 29a ausgebildet und auf einen Zuganker 30 aufgesteckt. Dieser ist mittig zwischen den Lagerstiften 25a, b am Greiferteil 21 beweglich angelenkt und erstreckt sich in einer radialen Ausnehmung 31 in der Montageplatte 20. Die Druckfeder 29a stützt sich einerseits am Zuganker 30 und andererseits an Anschlägen 32 am radial äusseren Ende der Ausnehmung 31 ab. Die Wirkung ist somit im Wesentlichen die gleiche wie diejenigen der Zugfeder 29 beim Ausführungsbeispiel nach Figur 5 bis 8. Jedoch ist die Druckfeder 29a besser geschützt und die Betriebssicherheit ist höher.

In Abwandlung der beschriebenen und gezeichneten Ausführungsbeispiele können die erfindungsgemäß ausgebildeten Aufnahmeelemente auch bei geraden Förderern eingesetzt werden. Das Ausführungsbeispiel nach den Fig. 2 bis 4 kann auch nur mit einer Feder und das Ausführungsbeispiel nach den Fig. 5 bis 8 mit nur einer Sitzvertiefung ausgeführt werden, insbesondere dann, wenn lediglich eine Verschwenkmöglichkeit aus der Normalstellung in nur einer Richtung, d.h. entweder in Förderrichtung oder entgegen Förderrichtung, erforderlich ist. Beim Ausführungsbeispiel nach den Fig. 5 bis 8 kann die Sitzvertiefung genau auf die Abmessung des Lagerstiftes angepasst werden, so dass, zumindest in der Nähe der Normalstellung, nur eine Verschiebung im wesentlichen senkrecht zur Förderrichtung möglich ist. Statt der dargestellten Schraubenfedern können anders konstruierte Federn verwendet werden. Beim Ausführungsbeispiel nach Figur 2 bis 4 kann das Führungsstück 11 mit dem Langloch 10 auch entfallen oder ohne Anschlagwirkung gestaltet werden. Die Bewegungsbeschränkung erfolgt dann allein durch die Abstandsstifte 16 in Zusammenwirkung mit den Langlöchern 17.

## Patentansprüche

1. Fördervorrichtung, mit einem Träger (2, 20) und mindestens einem mit einer Aufnahmeöffnung (5, 22) für Fördergut versehenen Aufnahmeelement (4a, 4b), das gegen die Kraft einer Feder (13, 29) um eine Drehachse als Ganzes relativ zum Träger ausweichend verschwenkbar gelagert ist, insbesondere Sternrad zum Fördern von Behältern oder Vorformlingen, **dadurch gekennzeichnet, dass** die Kraft der Feder (13, 29) im wesentlichen rechtwinklig zur Förderrichtung (F) zwischen einer Angriffsstelle (12, 27) am Aufnahmeelement (4a, 4b) und einer Angriffsstelle (14, 26) am Träger (2) wirksam ist.

2. Fördervorrichtung nach Anspruch 1, **dadurch gekennzeichnet, dass die** Angriffsstelle (12, 27) der Feder (13, 29) am Aufnahmeelement (4a, 4b) in Förderrichtung (F) einen Abstand zur Drehachse (9, 25a, 25b) aufweist.

3. Fördervorrichtung nach Anspruch 1 oder 2, **dadurch gekennzeichnet, dass** ein Anschlag (16, 17, 28a, 28b) für die Schwenkbewegung (S) vorgesehen ist.

4. Fördervorrichtung nach einem der Ansprüche 1 bis 3, **dadurch gekennzeichnet, dass** das Lager als Dreh-Verschiebe-Lager (8, 23) ausgebildet ist, wobei das Aufnahmeelement (4a, 4b) gegen die Kraft der Feder (13, 29) sowohl verschwenk- als auch verschiebbar ist.

5. Fördervorrichtung nach einem der Ansprüche 1 bis 4, **dadurch gekennzeichnet, dass** die Drehachse (9, 25a, 25b) in einer Öffnung (10, 24a, 24b) aufgenommen ist, deren Abmessung größer als der Durchmesser der Drehachse (9, 25a, 25b) ist.

6. Fördervorrichtung nach Anspruch 5, **dadurch gekennzeichnet, dass** die Öffnung (10) als Langloch ausgebildet ist.

7. Fördervorrichtung nach Anspruch 5 oder 6, **dadurch gekennzeichnet, dass** zwischen der Öffnung (10) und der Drehachse (9) ein Führungsstück (11) angeordnet ist.

8. Fördervorrichtung nach Anspruch 7, **dadurch gekennzeichnet, dass** das Führungsstück (11) um die Drehachse (9) verschwenkbar ist und mit zwei gegenüberliegenden Gleitflächen (11a) an zugeordneten Gegenflächen (10a) in der Öffnung (10) gleitend anliegt, und/oder mit zwei Anschlägen (11b, 10b) zum Begrenzen der Verschiebung (V) versehen ist.

9. Fördervorrichtung nach einem der Ansprüche 5 bis 8, **dadurch gekennzeichnet, dass** die Drehachse (9) ortsfest am Träger (2) und die Öffnung (10) im Aufnahmeelement (4a) vorgesehen ist.

10. Fördervorrichtung nach einem der Ansprüche 1 bis 9, **dadurch gekennzeichnet, dass** zum Verschwenken des Aufnahmeelementes (4a) sowohl in Förderrichtung (F) als auch entgegen Förderrichtung (F) zwei Federn (13a, 13b) vorgesehen sind, die in Förderrichtung (F) beabstandet beidseitig der Drehachse (9) am Aufnahmeelement (4a) angreifen.

11. Fördervorrichtung nach einem der Ansprüche 1 bis 10, **dadurch gekennzeichnet, dass** die Feder (13) eine Druckfeder ist.

12. Fördervorrichtung nach einem der Ansprüche 1 bis 3, **dadurch gekennzeichnet, dass** das Lager (23) zwei in Förderrichtung (F) beabstandete Drehachsen (25a, 25b) und zwei offene Sitzvertiefungen (24a, 24b) für die Drehachsen (25a, 25b) aufweist.

13. Fördervorrichtung nach Anspruch 12, **dadurch gekennzeichnet, dass** die Feder (29) zwischen und im Abstand zu den Drehachsen (25a, 25b) angreift.

14. Fördervorrichtung nach Anspruch 12 oder 13, **dadurch gekennzeichnet, dass** die Feder (29) eine Zugfeder ist.

15. Fördervorrichtung nach einem der Ansprüche 12 bis 14, **dadurch gekennzeichnet, dass** die Drehachsen (25a, 25b) mit Spiel in den Sitzvertiefungen (24a, 24b) aufgenommen sind.

16. Fördervorrichtung nach einem der Ansprüche 12 bis 15, **dadurch gekennzeichnet, dass** die Sitzvertiefungen (24a, 24b) etwa halbkreisförmig ausgebildet sind und die Drehachsen (25a, 25b) einen runden Querschnitt aufweisen.

17. Fördervorrichtung nach einem der Ansprüche 12 bis 16, **dadurch gekennzeichnet, dass** die Sitzvertiefungen (24a, 24b) mit dem Träger (2) verbunden sind.

18. Fördervorrichtung nach einem der Ansprüche 12 bis 17, **dadurch gekennzeichnet, dass** die Sitzvertiefungen (24a, 24b) an einer bewegbar am Träger (2) angeordneten Montageplatte (20) angeordnet sind.

19. Fördervorrichtung nach einem der Ansprüche 12 bis 18, **dadurch gekennzeichnet, dass** die Feder (29) die Drehachse (25a, 25b) elastisch gegen die Sitzvertiefungen (24a, 24b) drückt.

## Claims

1. Conveying device, with a support means (2, 20) and at least one uptake element (4a, 4b), having an uptake opening (5, 22), for conveyed material, the said uptake element being supported such that it can swivel, as a whole, in alternate directions, around an axis of rotation, against the force of a spring (13, 29), particularly a pin feed wheel, **characterized in that** the force of the spring (13, 29) is essentially effective at a right-angle to the direction of conveying (F) between a point of application (12, 27) on the uptake element (4a, 4b) and a point of application (14, 26) on the support means (2).

2. Conveying device in accordance with claim 1, **characterized in that** the point of application (12, 27) of the spring (13, 29), in the direction of loading (F), on the uptake element (4a, 4b), is at a separation from the rotation axis (9, 25a, 25b).

3. Conveying device in accordance with claims 1 or 2, **characterized in that** an abutment means (16, 17, 28a, 28b) is provided for the swivelling movement (S).

4. Conveying device in accordance with one of claims 1 to 3, **characterized in that** the bearing is in the form of a moving pivot bearing (8, 23), whereby the uptake element (4a, 4b) can both swivel and shift against force of the spring (13,29).

5. Conveying device in accordance with one of claims 1 to 4, **characterized in that** the axis of rotation (9, 25a, 25b) is taken up in an opening (10, 24a, 24b) that is larger than the diameter of the rotation axis (9, 25a, 25b).

6. Conveying device in accordance with claim 5, **characterized in that** the opening is an elongated hole.

7. Conveying device in accordance with claims 5 or 6, **characterized in that** a guiding piece (11) is disposed between the opening (10) and the rotation axis (9).

8. Conveying device in accordance with claim 7, **characterized in that** the guiding piece (11) can swivel around the rotation axis (9) and, with two sliding surfaces (11a) lying opposite each other, lies on associated abutment surfaces (10a) such that it slides in the opening (10), and/or is provided with two fitting edges (11b, 10b) for limiting the displacement (V).

9. Conveying device in accordance with one of the claims 5 to 8, **characterized in that** the rotation axis (9) is fixed to the support means (2) and the opening (10) is provided in the uptake element (4a).

10. Conveying device in accordance with one of claims 1 to 9, **characterized in that** there are two springs (13a, 13b), which engage on the uptake element (4a), at a separation from each other either side of the rotation axis (9), the said two springs (13a, 13b) being there to swivel the uptake element (4a) both in the direction of conveying (F) and against the direction of conveying (F).

11. Conveying device in accordance with one of claims 1 to 10, **characterized in that** the spring (13) is a pressure spring.

12. Conveying device in accordance with one of claims 1 to 3, **characterized in that** the bearing (23) has two rotation spindles (25a, 25b), which are separated from each other in the direction of conveying, and two open seat recesses (24a, 24b) for the rotation spindles (25a, 25b).

13. Conveying device in accordance with claim 12, **characterized in that** the spring (29) engages between, and at a separation from, the rotation spindles (25a, 25b).

14. Conveying device in accordance with claim 12 or 13, **characterized in that** the spring (29) is a draw spring.

15. Conveying device in accordance with one of claims 1 to 10, **characterized in that** the rotation spindles (25a, 25b) are, with play, taken up in the seat recesses (24a, 24b).

16. Conveying device in accordance with one of claims 1 to 15, **characterized in that** the seat recesses (24a, 24b) are approximately semi-circular and the rotation spindles (25a, 25b) have a round, cross-sectional form.

17. Conveying device in accordance with one of claims 12 to 16, **characterized in that** the seat recesses (24a, 24b) are connected to the support means (2).

18. Conveying device in accordance with one of claims 12 to 17, **characterized in that** the seat recesses (24a, 24b) are disposed on a mounting plate (20) that is disposed, such that it can move, on the support means (2).

19. Conveying device in accordance with one of claims 12 to 18, **characterized in that** the spring (29) elastically presses the rotation spindle (25a, 25b) against the seat recesses (24a, 24b).

## Revendications

1. Dispositif de transport comportant un support (2, 20) et au moins un élément de réception (4a, 4b) pourvu d'un orifice de réception (5, 22) pour le produit à transporter, l'élément étant monté sur palier pivotant contre la force d'un ressort (13, 29) autour d'un axe de rotation en s'écartant comme un ensemble du support, notamment une roue en étoile destinée au transport de conteneurs ou de préformes,
**caractérisé en ce que**
la force du ressort (13, 29) agit essentiellement perpendiculairement à la direction de transport (F) entre un point d'attaque (12, 27) situé au niveau de l'élément de réception (4a, 4b) et un point d'attaque (14, 26) situé au niveau du support (2).

2. Dispositif de transport selon la revendication 1,
**caractérisé en ce que**
le point d'attaque (12, 27) du ressort (13, 29) situé au niveau de l'élément de réception (4a, 4b) est écarté de l'axe de rotation (9, 25a, 25b) dans la direction de transport (F).

3. Dispositif de transport selon la revendication 1 ou 2,
**caractérisé en ce qu'**
on prévoit une butée (16, 17, 28a, 28b) pour le pivotement (S).

4. Dispositif de transport selon l'une des revendications 1 à 3,
**caractérisé en ce que**
le palier est un palier rotatif coulissant (8, 23), l'élément de réception (4a, 4b) pouvant aussi bien pivoter que coulisser contre la force du ressort (13, 29).

5. Dispositif de transport selon l'une des revendications 1 à 4,
**caractérisé en ce que**
l'axe de rotation (9, 25a, 25b) loge dans une ouverture (10, 24a, 24b) dont les dimensions sont supérieures au diamètre de l'axe de rotation (9, 25a, 25b).

6. Dispositif de transport selon la revendication 5,
**caractérisé en ce que**
l'ouverture (10) est un trou oblong.

7. Dispositif de transport selon la revendication 5 ou 6,
**caractérisé en ce qu'**
une pièce de guidage (11) est disposée entre l'ouverture (10) et l'axe de rotation (9).

8. Dispositif de transport selon la revendication 7,
**caractérisé en ce que**
la pièce de guidage (11) est pivotable autour de l'axe de rotation (9) et repose de manière glissante par l'intermédiaire de deux surfaces de glissement (11a) opposées l'une à l'autre sur des contre-surfaces (10a) de l'ouverture (10), et/ ou est pourvue de deux butées (11b, 10b) visant à limiter le coulissement (V).

9. Dispositif de transport selon l'une des revendications 5 à 8,
**caractérisé en ce que**
l'axe de rotation (9) est fixe sur le support (2) et l'ouverture (10) est prévue dans l'élément de réception (4a).

10. Dispositif de transport selon l'une des revendications 1 à 9,
**caractérisé en ce qu'**
on prévoit deux ressorts (13a, 13b) qui s'engagent sur l'élément de réception (4a) en étant écartés des deux côtés de l'axe de rotation (9) dans la direction de transport (F) pour permettre le pivotement de l'élément de réception (4a) aussi bien dans la direction de transport (F) que dans le sens contraire à la direction de transport (F).

11. Dispositif de transport selon l'une des revendications 1 à 10,
**caractérisé en ce que**
le ressort (13) est un ressort de pression.

12. Dispositif de transport selon l'une des revendications 1 à 3,
**caractérisé en ce que**
le palier (23) présente deux axes de rotation (25a, 25b) espacés dans la direction de transport (F) et deux renfoncements d'assise ouverts (24a, 24b) destinés aux axes de rotation (25a, 25b).

13. Dispositif de transport selon la revendication 12,
**caractérisé en ce que**
le ressort (29) s'engage entre les axes de rotation (25a, 25b) en étant espacé de ceux-ci.

14. Dispositif de transport selon la revendication 12 ou 13,
**caractérisé en ce que**
le ressort (29) est un ressort de traction.

15. Dispositif de transport selon l'une des revendications 12 à 14,
**caractérisé en ce que**
les axes de rotation (25a, 25b) logent dans les renfoncements d'assise (24a, 24b) avec un certain jeu.

16. Dispositif de transport selon l'une des revendications 12 à 15,
**caractérisé en ce que**
les renfoncements d'assise (24a, 24b) sont approximativement en demi-cercle et les axes de rotation (25a, 25b) présentent une section ronde.

17. Dispositif de transport selon l'une des revendications 12 à 16,
**caractérisé en ce que**
les renfoncements d'assise (24a, 24b) sont reliés au support (2).

18. Dispositif de transport selon l'une des revendications 12 à 17,
**caractérisé en ce que**
les renfoncements d'assise (24a, 24b) sont montés sur une plaque de montage (20) mobile sur le support (2)

19. Dispositif de transport selon l'une des revendications 12 à 18,
**caractérisé en ce que**
le ressort (29) pousse l'axe de rotation (25a, 25b) contre les renfoncements d'assise (24a, 24b) de manière élastique.
